(19) Europäisches Patentamt
European Patent Office
Office européen des brevets

(11) **EP 1 978 743 B1**

(12) **EUROPEAN PATENT SPECIFICATION**

(45) Date of publication and mention
of the grant of the patent:
**01.07.2020 Bulletin 2020/27**

(51) Int Cl.:
*H04N 19/40* (2014.01)     *H04N 19/159* (2014.01)
*H04N 19/176* (2014.01)     *H04N 19/149* (2014.01)
*H04N 19/132* (2014.01)     *H04N 19/18* (2014.01)
*H04N 19/61* (2014.01)     *H04N 19/196* (2014.01)

(21) Application number: **07251456.5**

(22) Date of filing: **02.04.2007**

(54) **A method and apparatus for transcoding a video signal**

Verfahren und Vorrichtung zur Transkodierung eines Videosignals

Procédé et appareil de transcodage d'un signal vidéo

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**08.10.2008 Bulletin 2008/41**

(73) Proprietor: **Vestel Elektronik Sanayi ve Ticaret A.S.
45030 Manisa (TR)**

(72) Inventors:
- **Coskun, Orhan,
  Vestel Elektr. Sanayive Ticaret A.S.
  45030 Manisa (TR)**
- **Sahin, A.,
  Vestel Elektr. Sanayive Ticaret A.S.
  45030 Manisa (TR)**
- **Tetik, Y. E.,
  Vestel Elektr. Sanayive Ticaret A.S.
  45030 Manisa (TR)**
- **Ateskan, Y. S.,
  Vestel Elektr. Sanayive Ticaret A.S.
  45030 Manisa (TR)**

(74) Representative: **Beck Greener LLP
Fulwood House
12 Fulwood Place
London WC1V 6HR (GB)**

(56) References cited:
**EP-A- 1 553 779          WO-A-03/067778
US-A1- 2006 126 736     US-B1- 6 763 070
US-B1- 6 937 770**

- **"ISO/IEC CD 13818-: INFORMATION TECHNOLOGY - GENERIC CODING OF MOVING PICTURES AND ASSOCIATED AUDIO INFORMATION PART 2: VIDEO" INTERNATIONAL STANDARD - ISO, ZUERICH, CH, no. 659, 1 December 1993 (1993-12-01), pages A-C,I, XP000567291**
- **BENYAMINOVICH S ET AL: "Optimal transrating via DCT coefficients modification and dropping" INFORMATION TECHNOLOGY: RESEARCH AND EDUCATION, 2005. ITRE 2005. 3RD INTERNATIONAL CONFERENCE ON HSINCHU, TAIWAN JUNE 27-30, 2005, PISCATAWAY, NJ, USA,IEEE, 27 June 2005 (2005-06-27), pages 100-104, XP010832619 ISBN: 0-7803-8932-8**

## Description

The present invention relates to a method and apparatus for transcoding a video signal.

In embodiments, the invention relates to dynamic bit-rate reduction of pre-compressed video streams. Reducing the bit-rate of a pre-compressed data stream is called transrating, and devices that perform this task are called transrators. Transrating and transrators are sub-sets of more general fields of transcoding and transcoders, respectively. Video transcoding is a process in which pre-compressed video data is converted to another compressed valid video data. Embodiments of the present invention may be used in a variety of applications where bit-rate reduction is desired or required such as in video recorders, servers, network video servers and clients.

Digital video compression has made it possible to store, stream and transport large amounts of video content which was once impractical due to the excessive size of the data files required to convey the necessary information. Digital video compression, especially the MPEG formats and particularly the MPEG-2 format is widely used in devices including DVD players, satellite and terrestrial set top boxes, network video servers and receivers and many more.

A digital video is made up of the individual still images or "frames" that, when played in sequence, are able to give the impression of movement. Although each digital video compression format has its own particular characteristics a number of common features are also present. One such common feature is the use of intra frames which are coded independently from other frames. In MPEG terminology, such frames are referred to as I frames. An I frame may be thought of as a key frame or reference video frame which acts as a point of comparison to other frames during encoding, decoding and play-back.

Another common feature is the use of inter frames which are coded with reference to other frames. They can only be decoded after their reference frames are decoded. Inter frames are of two types, commonly referred to in MPEG terminology as P frames and B frames. P frames may also be referred to as reference inter frames whereas B frames may be referred to as non-reference inter frames.

As mentioned above, transrating is a subset of a broader type of video stream processing referred to as transcoding. When used herein, transcoding is used to mean the changing of any characteristics of a digitally compressed video stream to produce a new valid digitally compressed video stream. Transrating is a transcoding process which aims only at bit-rate change, usually reduction, and it is an essential component in band-limited network environments.

Transrators with dynamic bit-rate adaptation mechanisms are particularly important when variable bit-rate (VBR) encoded video is to be streamed over a constant bit-rate (CBR) channel. If the bit-rate of the VBR video fluctuates continuously, fast adaptation is required to produce a suitable CBR output signal. Therefore, the ratio of instantaneous output bit-rate to instantaneous input bit-rate must dynamically change to produce a nearly CBR video output whose bit-rate is always below that of the transmission channel.

When transrating, there are four main issues to consider. These are complexity of the operation, quality required of the output signal, bit-rate required of the output signal and adaptation speed. A method and apparatus are sought which provides the highest quality output video using the lowest complexity of system and the lowest bit-rate with the fastest adaptation speed possible. Different transrating techniques have been developed and implemented. The architecture and performance of known systems differ and they trade speed for quality and are useful for applications with no time constraint. In other examples, the transrator architectures trade quality for speed and for simplicity such as to be useful in real-time applications.

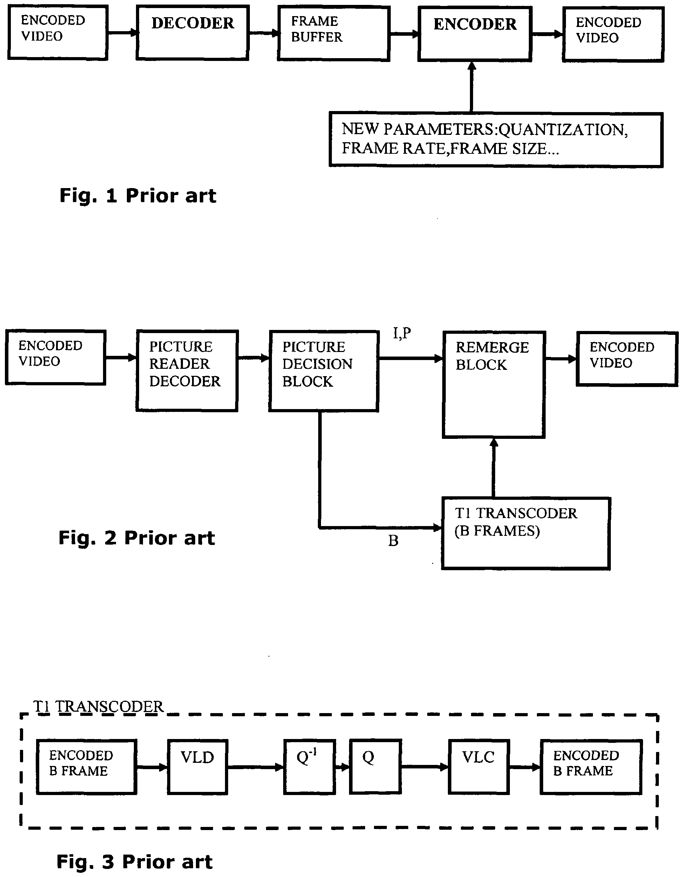

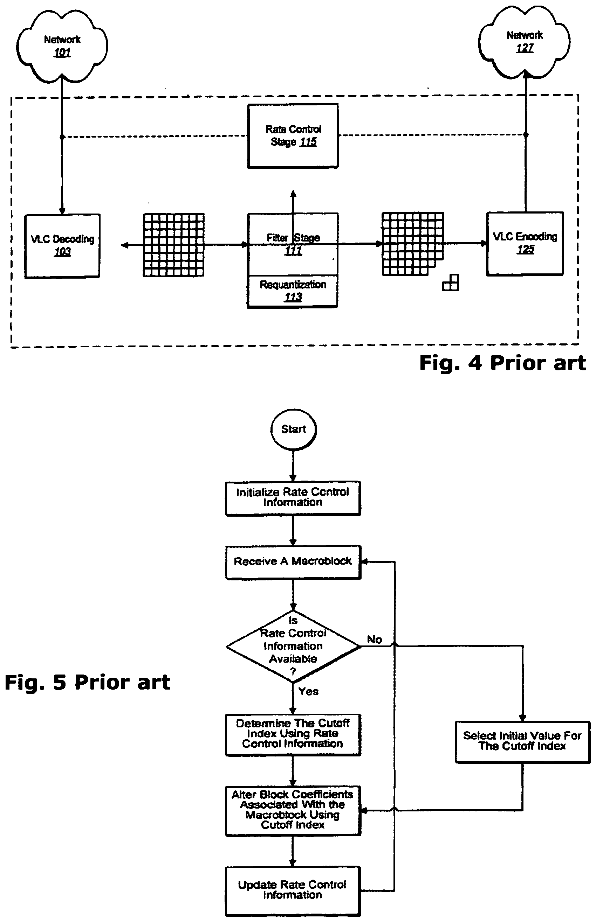

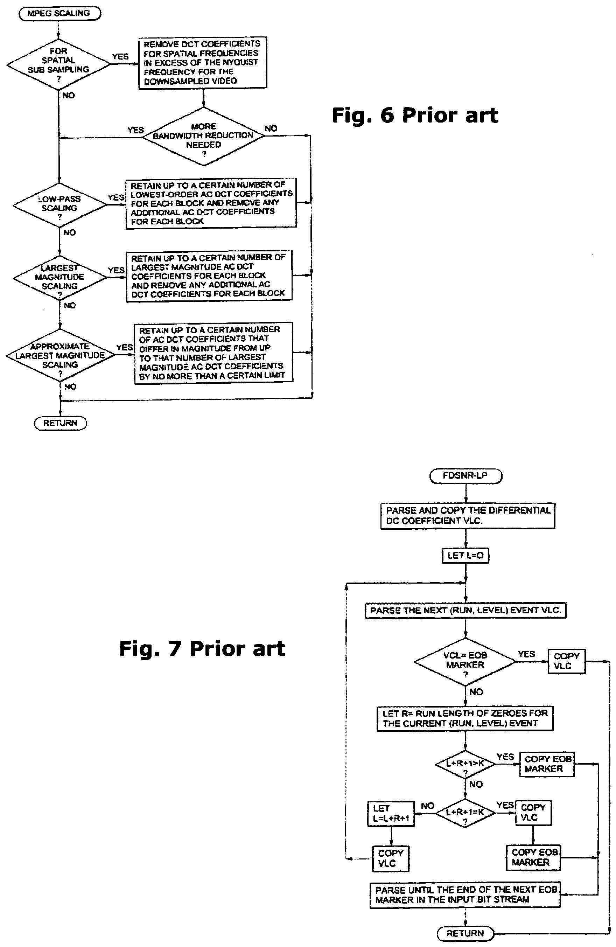

Depending on their purposes and operational platforms, there are a variety of transrator architectures currently used. Examples of architectures and methods of transrating that are known are shown in each of Figures 1 to 7. In Figure 1 a simple transrator is shown comprising a cascade of a decoder and an encoder. Using this architecture, the digital video stream can be decoded into frames and encoded again using different encoding parameters. The decoder and encoder parts are decoupled and this is therefore an extremely flexible transrator architecture. However the cost of this flexibility is high computational complexity, relatively low speed and high latency.

Furthermore, in spite of these high costs, the architecture does not guarantee the best output due to the fact that two inherently lossy processes (decoding and encoding) are cascaded. Thus, this architecture is impractical for most purposes.

Figure 2 shows an example in which only B frames are transcoded. I and P frames are routed directly through the system. The transcoding system used in the apparatus of Figure 2 is shown in more detail in Figure 3. As can be seen, the system is complex as it requires the sequence of variable length decoding, de-quantisation, inverse transformation, quantisation, forward transformation and variable length encoding. Thus, the complexity is significant. Although such an arrangement may be effective, transrating only the B frames and leaving I and P frames untouched will not produce a satisfactory reduction in bit-rate, where this required, for most digital videos. Furthermore, the complex sequence of steps performed on the B frames means that the process is slow and the lossy inverse quantisation can lead to significant degradation in quality of the output signal.

Figures 4 and 5 show an apparatus and method flow diagram as described in US-A-6,763,070. The system described herein relates to a transrating scheme in which a cut-off index is determined and transform coefficients beyond this cut-off index are eliminated. The cut-off index is determined by the rate control information derived from the input bit-rate, required output bit-rate and previously processed macro blocks.

EP-A-1553779 describes a method for reducing the bit-rate of a video stream which is designed specifically for use with trick modes. The bit-rate can be reduced using the method to a rate similar to that during normal mode. A first step reduces the number of frames transmitted by selecting only certain frames for transmission. Only certain frames (e.g. every second I-frame) are transmitted, as for normal trick mode. A second step reduces the bit rate still further by selecting only certain DCT coefficients related to the selected frames for transmission. I-frames are processed so that only some of the non-zero transform coefficients are transmitted in order to reduce the bit-rate.

Last, with reference to the prior art, US-A-6,937,770 discloses a system and apparatus for adapted bit-rate control for rate reduction of MPEG coded video. The system utilises a scale factor between average frame size (number of bits) of input stream and desired frame size of output. This scale factor is used to compute the number of bits used for each macro block of desired rate output stream. The scale factor may be dynamically changed to produce a desired rate output. Despite its low complexity and fast adaptivity, the scheme leads to problems such as distortion, heavy blocking and drift artefacts in high motion areas of a frame.

According to a first aspect of the present invention, there is provided a method of transcoding a video signal made up of an input bit stream representative of frames of a video and representative of the non-zero transform coefficients of the video signal, each frame being made up of blocks of pixels, there being a corresponding block of data within the input bit stream corresponding to each block of pixels, the method comprising: for the bit stream of a frame of the video signal, identifying whether the frame is an I frame, a P frame or a B frame, characterised in that if the frame is identified as an I frame, the method comprises performing no transrating operation on the frame and if it is identified as a P frame or a B frame: the method comprises determining the number of non-zero transform coefficients within each block for a plurality of blocks of data; for each block, disregarding a proportion of the number of non-zero transform coefficients, wherein the proportion of non-zero transform coefficients disregarded is determined by a factor of $\alpha$, wherein there are N non-zero transform coefficients in a block of a received frame and M in a block of the transrated video stream, wherein $M = \alpha N$; and generating an output bit stream comprising all the coefficients from blocks within I frames and only the retained coefficients of blocks from the P and B frames, wherein there is a non-linear relationship between M and N and $\alpha$ is varied in real time on a per block basis to control dynamically the bit-rate of the output bit stream by a method such as a least mean squares relationship; and wherein $\alpha$ is defined as a function of output bit-rate and desired bit-rate.

The proportion of data is disregarded in respect of all blocks within the frame. In examples the proportion is the same in respect of all blocks.

Preferably, the input bit stream is representative of transform coefficients of frames of the video signal, e. g. a pre-compressed video signal in accordance with some format such as one of the MPEG formats, and wherein the disregarded data is a proportion of the non-zero transform coefficients for all blocks within a frame.

The local motion activity within a block of an image is dependent on the number of non-zero transform coefficients coded for that block. Therefore, by taking into account the number of coefficients on a per block basis, local motion activity is considered and accounted for in the transrating operation. This contrasts with known transrating operations in which the only factor taken into account when determining the size or number of bits that can be allocated to each macro-block in a frame of a transrated video signal is input bit-rate and desired output bit-rate. The use of some proportion (which may be substantially the same for all blocks within any frame) of the coefficients as opposed to fixed number ensures that motion activity within a block is accounted for and blocks in which there is motion do not suffer significant amounts of visual degradation.

Furthermore, the method allows for the transrating of reference inter or "P" frames. Without the use of the present method, transrating of P frames would increase the drift effect and blockiness especially in high motion scenes. In this present method this may be avoided by leaving the I frames within the input bit stream intact and directly copying them to the output bit stream and so motion vectors and other such parameters are copied directly to the output bit stream. Any loss of data in an I frame will propagate directly to related P and B inter frames. Using the original I frames within the output bit stream will reduce the drift effect significantly.

In the present case, since local motion activity is taken into account in the process of transrating, by disregarding a configurable proportion of the data in respect of all blocks within the frame, an even distribution of visual degradation is made so that distortion is less visible in the transrated video stream and heavy blocking and drift artefacts are avoided in high motion areas of the picture frame. A block is a subregion of pixels within a frame. In the example of MPEG-2 compression, a block is typically an 8x8 group of pixels.

In an example not forming part of the invention, there is provided a method of transrating a video signal made up of a bit stream corresponding to a series of non-zero transform coefficients representative of frames of a video each frame being made up of blocks of pixels, there being a corresponding block of transform coefficients for each block of pixels, the method comprising for the bit stream of a frame of the video signal, identifying the type of frame; and in dependence on the type of frame, performing a transrating operation on the frame, wherein for certain types of frame, a configurable proportion of the transform coefficients are disregarded in respect of all blocks within the frame, thereby generating a transrated output bit stream.

The method comprises identifying whether the frame is an I frame, a P frame or a B frame and, if it is identified as an I frame, performing no transrating operation on the frame.

Certain transform coefficients are removed from the frame by the insertion of an End of Block (EOB) code at a defined point within each block of the frame within the output bit stream.

An output bit stream is generated comprising all the non-zero coefficients from blocks within I frames and only the maintained coefficients of blocks from the P and B frames.

According to a second aspect of the present invention, there is provided apparatus for transcoding a video signal made up of a bit stream corresponding to frames of a video and representative of the non-zero transform coefficients of the video signal, each frame being made up of blocks of pixels, each block of pixels having a corresponding block of data within the bit stream, the apparatus comprising: a receiver for receiving the encoded video signal in the form of a digital bit stream; a reader arranged upon receipt of a frame to identify identify whether the frame is an I frame, a P frame or a B frame; characterised in that the apparatus comprises a stream copy control arranged, if the frame is identified as an I frame, to perform no transrating on the frame and if the frame is identified as an P frame or a B frame, to determine the number (N) of non-zero coefficients within each block for a plurality of blocks of data and, for each block, to disregard a proportion of the number (N) of non-zero transform coefficients, wherein the proportion of non-zero transform coefficients disregarded is determined by a factor of $\alpha$, wherein there are N non-zero transform coefficients in a block of a received frame and M in a block of the transrated video stream, wherein M = $\alpha$ N; wherein the stream copy control is arranged to generate an output bit stream comprising all the coefficients from blocks within I frames and only the retained coefficients of blocks from the P and B frames; wherein there is a non-linear relationship between M and N and $\alpha$ is varied in real time on a per block basis to control dynamically the bit-rate of the output bit stream by a method such as a least mean squares relationship; and wherein $\alpha$ is defined as a function of output bit-rate and desired bit-rate.

Examples of embodiments of the present invention will now be described by way of example only with reference to the accompanying drawings, in which:

Figures 1 to 7 show schematic representations of known transrator architectures and methods;

Figure 8 shows a schematic representation of an example of a transrator;

Figure 9 is a schematic representation showing block adaptive truncation; and

Figure 10 is an example of a possible relationship between parameters M and N used in an embodiment of a transcoding method.

The following description is in relation to a transrator as one particular example of a transcoder.

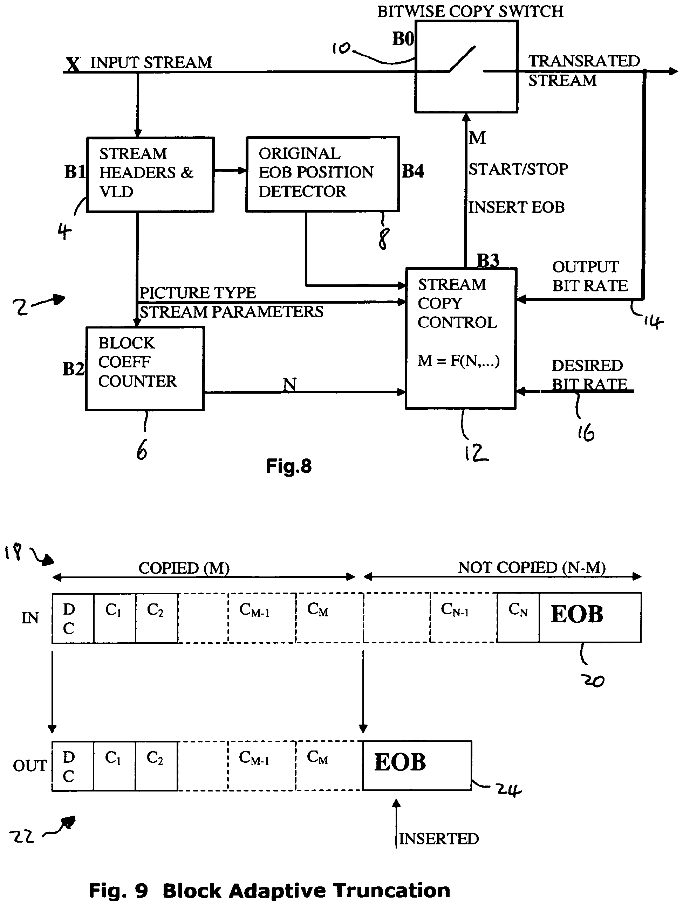

The transrator of Figure 8 is arranged to receive an input bit stream of video data X and produce a transrated output bit stream of video data Y. The transrator 2 has a header decoder 4 arranged to decode the header of each received frame. A block coefficient counter 6 is provided for counting the number of non-zero transform coefficients N within each block of the stream of data preferably only for inter frames. Of course, the blocks of data within the input stream X correspond to blocks of pixels, e.g. 8x8 or 4x4, within a frame of the received video signal. The number of non-zero coefficients N is only determined for certain types of frames, preferably the inter frames (both P and B frames).

The transrator is arranged to discard a certain, configurable proportion of the non-zero transform coefficients in respect of plural (preferably all) blocks within a frame being processed. Local motion activity in a block is related to the number N of non-zero transform coefficients for that block. Thus, local motion activity is taken into account, since an even distribution of visual degradation will be made to all blocks within the frame and not concentrated within blocks which are part of a motion sequence. If a fixed number of coefficients (as opposed to some proportion or derived value based on a mathematical function) were used for every block irrespective of the actual number necessary accurately to represent the block then the effect on blocks of a high number of coefficients would be disproportionately large. Since blocks of local motion have a larger number of coefficients the effect would be to concentrate degradation around those blocks. Preferably the same proportion of coefficients is disregarded in respect of all blocks within any frame.

As will be explained below, it is preferred that this is achieved by determining an integer number M, which is a function of N, for each block, and then by retaining the first M non-zero coefficients whilst discarding the remaining N-M non-zero coefficients.

An Original End Of Block position detector 8 is provided to detect the position of an end of block code that will typically be provided between blocks of coefficients within the input stream X.

A switch 10 is provided that is arranged when closed to copy bits from the input stream X directly to the output stream Y. When the switch 10 is opened, the direct copying of bits from the input stream X to the output stream Y is stopped. In its place, a stream of bits is provided via the stream copy control 12. The stream copy control 12 is arranged to send an open or closed or "start" and "stop" signal to the switch 10.

The header decoder 4 is used to decode the headers from blocks to enable variable length decoding to take place. The EOB position detector 8 detects the bit position of the original EOB code in the input stream X and communicates this position to the stream copy control 12. As mentioned above, the block coefficient counter 6 is arranged to count the number of non-zero coefficients N within a block and communicate the determined number N to the stream copy control 12.

A feedback signal 14 is provided to the stream copy control 12 from the output video stream Y. In addition, a desired bit-rate signal 16 is also provided to the stream copy control 12. Thus, a number of inputs are provided to the stream copy control 12 including the number of non-zero coefficients in each block within a frame represented by N, the picture or frame type (I,P or B), various stream parameters, a desired bit-rate, the achieved output bit-rate and the position of the original EOB code within the input bit stream X.

In use, it is preferred that unless there is an inter frame, e.g. a P or B frame, the stream copy control 12 sends a signal to the switch 10 to copy all bits of the input stream X to the output stream Y. Copying is performed on a bitwise basis and not on a byte or word basis. In addition, start codes and header information of the inter frames along with motion information are all copied by the switch 10 to the output bit stream X.

Based on the inputs it receives, the stream copy control 12 decides where and when an EOB code must be inserted in the output stream. Insertion of an EOB code requires the switch 10 to be stopped, i.e. effectively opened, such that the required EOB code can be inserted into the output stream Y. No further bits from the input stream are copied to the output stream Y until the original EOB code in the input stream is detected by the EOB position detector 8. Once the original EOB is detected by the EOB position detector 8, the stream copy control 12 sends a signal to the switch 10 to resume a bit copy operation until the next EOB code insertion is carried out. This process continues until all blocks within a frame are processed.

Thus, it can be seen that there is no requirement for any re-quantisation or variable length decoding, de-quantisation, inverse transformation, quantisation, forward transformation and variable length encoding as is required where the input video stream is to be re-quantised. The process is therefore computationally simple.

The apparatus of Figure 8 provides a good compromise between complexity, quality and adaptation speed by employing an open loop architecture that truncates transform coefficients in parsing order and producing as a result a lower bit-rate video stream.

Furthermore, the example shown in Figure 8 provides a fast, low complexity, transform domain transrator which uniformly distributes any visual degradation to all blocks within a frame, e.g. 8x8 pixel blocks, by taking into account local motion activity on a per block basis.

The utilisation of a feedback signal from the output stream Y together with a desired bit-rate input enable fast and simple dynamic bit-rate adaptation.

The apparatus takes into account local motion activity and makes an even distribution of visual degradation to all blocks within any particular frame thereby to make distortion less visible and to prevent heavy blocking and drift artefacts in high motion areas of a frame. The conversion rate can be dynamically altered in dependence on instantaneous bit-rate requirements while still taking into account local motion activity.

The apparatus and method takes advantage of the fact that transform coefficients above a certain frequency level require a large number of bits to encode but add little to the image quality. This is particularly so on inter frames in which, typically, only the difference block, after motion compensation, is transform encoded. The difference blocks due to the motion compensation generally have less correlation than the absolute blocks in intra frames and blocks within the frames. Less correlation reduces the overall importance of the transform coefficients and in particular of high frequency transform coefficients. Therefore, the elimination of these bit-consuming coefficients will not harm the resulting image quality in a significant way, but will produce a substantial reduction of the bit-rate of the video stream.

Thus, a block adaptive truncation is applied in dependence on the type of frame, i.e. only to certain of the frames, typically P and B frames, and this is achieved by the insertion of an EOB code in the corresponding output bit stream before the position that it would appear were the output bit stream a complete copy of the input bit stream.

As mentioned above, the stream copy control 12 enables a block adaptive truncation of the transform coefficients by generating a number M representing the first M non-zero coefficients (out of a total N). The first M non-zero coefficients are stream copied in bitwise order to the output before the insertion of a new EOB code. M is a function of parameters including any or all of N, picture type, block position in the picture, picture position in a group of pictures (GOP), output bit-rate and other stream parameters. If M is a proportion of N and a function of the picture type and target bit-rate, drift effect and blocking artefacts are significantly reduced. Any suitable relation between M and N may be used which, as will be explained below, need not be linear. If M is determined to be greater than N, all transform coefficients in the block are kept and none are disregarded. If M, when calculated, is not an integer, rounding is performed to determine an integer value for M.

As mentioned above, for intra frames all the data is directly copied from the input bit stream to the output stream. All information other than the inter frame transform coefficients in the input stream is also copied into the output bit stream. Inter frame transform coefficients are fully or partially copied to the output bit stream such that for a video the bit-rate of the output bit stream will be reduced as compared to that of the input bit stream.

Figure 9 shows a schematic representation of a block from an input stream and the corresponding block produced as part of the output stream using apparatus such as that shown in Figure 8. The example of Figure 9 assumes that a discrete cosine transform has first been used to compress the input video stream. Such compression is used in, for example, MPEG-2 compression. Of course, any suitable transform can be used to generate the transform coefficients and indeed other frequency space transforms are used in other video compression algorithms and techniques.

The block 18 from the input stream is made up of a quantised discrete cosine coefficient and a total of N run length codes for quantised DCT coefficients taken from a zig-zag scan order corresponding to a block of pixels within a frame of the video represented by the input stream. As can be seen, there are a total of N non-zero coefficients after which an EOB code 20 is provided within the bit stream.

A block 20 from the output stream comprises M components followed by an EOB code 24. The EOB code is inserted into output bit stream by the stream copy control 12 within the apparatus of Figure 8. It can be seen that the components $C_1$ to $C_M$ are the same in both the block 18 from the input bit stream and the block 22 from the output bit stream. Thus, no processing is required of the first M non-zero coefficients of any block from the input bit stream. The remaining N minus M coefficients are simply discarded.

Given that the block of coefficients $C_1$ to $C_M$ within the output bit stream codes for the corresponding block of coefficients $C_1$ to $C_N$ within the input stream, a reduction in bit-rate has been achieved whilst taking into account local motion activity, without any complex processing and without introducing significant distortion into the processed video.

The value of M can be, but is not necessarily, restricted to a constant proportion of N such that M is equal to N multiplied by a constant a. Thus, the relationship between M and N, in one example, can be expressed as follows:

$$M = \alpha \times N$$

where $\alpha$ is a number between zero and one and where $\alpha$ may itself be a function of other stream parameters including, for example, any or all of picture coding type, output bit-rate and desired output bit-rate. Since $\alpha$ is varied on a per block basis as a function of output bit-rate and desired bit-rate, dynamic adaptation of output bit-rate to desired bit-rate can be achieved. Furthermore, instantaneous variation of $\alpha$ stabilises the output bit-rate and can be controlled so that the output bit-rate is always just below a desired bit-rate, thereby complying with channel bandwidth requirements. The degree to which

$\alpha$ may be varied can be quite small so that the benefit of distributing the visual degradation across all blocks is not lost by the variation between blocks of $\alpha$.

Block adaptive truncation of transform coefficients in frames produces low drift and low bit-rate streams by allowing transrating of P reference frames in addition to the B inter frames. The proposed architecture, as shown in Figure 8, does not perform any quantisation, inverse quantisation, transform, inverse transform, motion vector search or variable length encoding. It is an extremely low complexity architecture which in practice simply performs header decoding, non-zero transform coefficient counting and EOB code insertion. The computational requirements are relatively low bearing in mind the output quality, the bit-rate reduction and speed achieved.

As mentioned above, it is not necessary that the relationship between N and M is linear. Having a relationship defined by M = $\alpha$ N does not guarantee a linear relationship between input and output bit-rates. It is clear that for a given block, the larger $\alpha$ is, the more bits are consumed for that block. Hence, $\alpha$ can be updated using a least mean squares (LMS) type of algorithm to obtain the desired output bit-rate. An example would be as follows:

$$\alpha_P(t+1) = \alpha_P(t) + \mu(p - p(\alpha_P(t))$$

$$\alpha_B(t+1) = \alpha_B(t) + \mu(b - b(\alpha_B(t))$$

where $t$ represents the update time,

$b$ and $p$ are the target bit consumption at the block, macroblock, slice or frame level for B and P frames respectively,

$b(\alpha)$ and $p(\alpha)$ are the resultant transrator bit consumption as a function of $\alpha$,

$\mu$ ($\mu > 0$) is the step size which is chosen small enough to have a stable adaptation algorithm and large enough to make the system converge to the target bit-rate.

In this system, $b$ and $p$ may be computed easily offline.

While the invention has been particularly shown and described with reference to specific embodiments thereof, it will be understood by those skilled in the art that changes in the form and details of the disclosed embodiments may be made. For example, the embodiments described above may be implemented using firmware, software or hardware. Moreover, embodiments of the present invention may be employed with a variety of communication protocols and should not be restricted to the ones mentioned above. For example the techniques of the present invention can be implemented between a landline network and a wireless network. The transform coefficient filtering can be applied to one or two dimension transform coefficients for a wide variety of data formats. Therefore, the scope of the invention should be determined with reference to the appended claims.

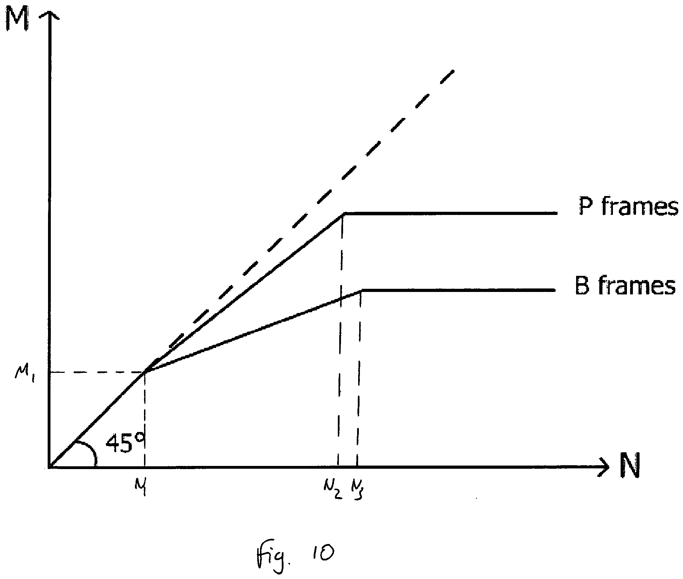

Figure 10 shows an example of a possible relationship between the parameters M and N. It will be appreciated that in the examples shown, the parameters M and N are different for P and B frames. In the examples shown, up to the value $N_1$ there is a linear relationship between the value for (M,N) of (0,0) and $(M_1, N_1)$. Beyond this value of $N_1$ the value of $\alpha$ reduces and although the relationship is still linear, it can best be defined by the equation:

$$M = \alpha N + c.$$

Beyond the values $N_2$ and $N_3$ (for P and B frames respectively) the value of M remains constant. The example of Figure 10 is merely to show that any suitable relationship between M and N can be derived and used.

Embodiments of the present invention have been described with particular reference to the examples illustrated. However, it will be appreciated that variations and modifications may be made to the examples described.

## Claims

1. A method of transcoding a video signal made up of an input bit stream (X) representative of frames of a video and representative of the non-zero transform coefficients of the video signal, each frame being made up of blocks of pixels, there being a block of data (18) within the input bit stream corresponding to each block of pixels, the method comprising:

   for the bit stream of a frame of the video signal, identifying whether the frame is an I frame, a P frame or a B frame, **characterised in that** if the frame is identified as an I frame, the method comprises performing no transrating operation on the frame and
   if it is identified as a P frame or a B frame:

      the method comprises determining (6) the number (N) of non-zero transform coefficients ($C_1$ to $C_N$) within each block for a plurality of blocks of data;
      for each block, disregarding a proportion of the number (N) of non-zero transform coefficients, wherein the proportion of non-zero transform coefficients disregarded is determined by a factor of $\alpha$, wherein there are N non-zero transform coefficients in a block of a received frame and M in a block of the transrated video stream, wherein $M = \alpha N$; and
      generating an output bit stream (Y) comprising all the coefficients from blocks within I frames and only the retained coefficients of blocks from the P and B frames, wherein there is a non-linear relationship between M and N and $\alpha$ is varied in real time on a per block basis to control dynamically the bit-rate of the output bit stream by a method such as a least mean squares relationship; and wherein $\alpha$ is defined as a function of output bit-rate and desired bit-rate.

2. A method according to claim 1, wherein the certain transform coefficients are removed from the frame by the insertion of an End of Block code (24) at a defined point within each block of the frame within the output bit stream (Y) .

3. A method according to claim 2, in which the position at which an End of Block code (24) within the output bit stream (Y) is provided is varied to control the bit-rate of the transrated video signal.

4. A method according to any of claims 1 to 3, comprising providing a switch (10) arranged in one configuration to switch the received bit stream (X) directly to the output bit stream (Y) and in a second configuration to switch a transcoded bit stream of the input bit stream to the output stream.

5. A method according to claim 4, wherein the switch (10) is controlled in dependence on one or more of N, the desired output bit-rate, the type of frame, block position in the picture, picture position within a group of pictures (GOP), output bit-rate and other stream parameters.

6. A method according to any of claims 1 to 5, wherein $\alpha$ is defined by the following equations

$$\alpha_P(t+1) = \alpha_P(t) + \mu(p - p(\alpha_P(t)))$$

$$\alpha_B(t+1) = \alpha_B(t) + \mu(b - b(\alpha_B(t)))$$

in which
$t$ represents the update time,

   $b$ and $p$ are the target bit consumption at the block, macroblock, slice or frame level for B and

13 **EP 1 978 743 B1** 14

P frames respectively,
$b(\alpha)$ and $p(\alpha)$ are the resultant transrator bit consumption as a function of $\alpha$,
$\mu$ ($\mu>0$) is the step size which is chosen small enough to have a stable adaptation algorithm and large enough to ensure convergence to the target bit-rate.

7. A method according to any of claims 1 to 6, wherein the input bit stream (X) is an encoded MPEG-2 video signal.

8. A method according to any of claims 1 to 7, wherein the input bit stream (X) is in the form of a discrete cosine transform of an original image file.

9. Apparatus (2) for transcoding an encoded video signal made up of a bit stream (X) corresponding to frames of a video and representative of the non-zero transform coefficients ($C_1$ to $C_N$) of the video signal, each frame being made up of blocks of pixels, each block of pixels having a corresponding block of data (18) within the bit stream, the apparatus comprising:

   a receiver for receiving the encoded video signal in the form of a digital bit stream;
   a reader arranged upon receipt of a frame to identify whether the frame is an I frame, a P frame or a B frame; and

   **characterised in that** the apparatus comprises a stream copy control (12) arranged, if the frame is identified as an I frame, to perform no transrating on the frame and if the frame is identified as an P frame or a B frame, to determine the number (N) of non-zero coefficients within each block for a plurality of blocks of data and, for each block, to disregard a proportion of the number (N) of non-zero transform coefficients, wherein the proportion of non-zero transform coefficients disregarded is determined by a factor of $\alpha$, wherein there are N non-zero transform coefficients in a block (18) of a received frame and M in a block (20) of the transrated video stream, wherein M = $\alpha$ N; wherein the stream copy control (12) is arranged to generate an output bit stream comprising all the coefficients from blocks within I frames and only the retained coefficients of blocks from the P and B frames; wherein there is a non-linear relationship between M and N and $\alpha$ is varied in real time on a per block basis to control dynamically the bit-rate of the output bit stream by a method such as a least mean squares relationship; and wherein $\alpha$ is defined as a function of output bit-rate and desired bit-rate.

10. Apparatus (2) according to claim 9, comprising an End of Block position detector (8) to detect the position within the input bit stream (X) of the end of blocks.

11. Apparatus (2) according to any of claims 9 and 10, comprising a switch (10) arranged in one configuration to copy the input bit stream (X) directly to the output bit stream (Y) and in a second configuration to copy processed frames into the output stream.

12. Apparatus (2) according to claim 11, comprising a block coefficient counter to count the coefficients ($C_1$ to $C_N$) within a received block (18) and to provide the number N of non-zero coefficients to said stream copy control (12) arranged to control the switch (10), the number N being dependent on motion activity within the block.

13. Apparatus (2) according to claim 12, wherein the stream copy control (12)is arranged to determine the number M of coefficients to be included in a block (20) within the output stream.

14. Apparatus (2) according to claim 13, wherein the stream copy control (12) is configured to determine the number M in dependence on various parameters including one or more of desired output bit-rate, actual output bit-rate, frame type and the number N of non-zero coefficients within a received block (18).

15. Apparatus according to claim 14, wherein the stream copy control (12) is arranged to insert an End of Block code (24) within the output bit stream (Y) at a position within a block of coefficients within the output stream such that the block will include only M coefficients ($C_1$ to $C_M$).

16. Apparatus (2) according to any of claims 9 to 15, wherein $\alpha$ is defined by the following equations

$$\alpha_P(t+1) = \alpha_P(t) + \mu(p - p(\alpha_P(t))$$

$$\alpha_B(t+1) = \alpha_B(t) + \mu(b - b(\alpha_B(t))$$

in which

   $t$ represents the update time,
   $b$ and $p$ are the target bit consumption at the block, macroblock, slice or frame level for B and P frames respectively,
   $b(\alpha)$ and $p(\alpha)$ are the resultant transrator bit consumption as a function of $\alpha$,
   $\mu$ ($\mu>0$) is the step size which is chosen small enough to have a stable adaptation algorithm and large enough to ensure convergence to the target bit-rate.

**17.** Video playback apparatus comprising an apparatus (2) for transcoding an encoded video signal according to any of claims 9 to 16.

**Patentansprüche**

**1.** Verfahren zum Transkodieren eines Videosignals, das aus einem Eingangsbitstrom (X) besteht, der Frames eines Videos darstellt und der Transformationskoeffizienten ungleich Null des Videosignals darstellt, wobei jeder Frame aus Blöcken von Pixeln besteht, wobei es in dem Eingangsbitstrom einen Datenblock (18) gibt, der jedem Block von Pixeln entspricht, wobei das Verfahren folgendes umfasst:

für den Bitstrom eines Frames des Videosignals, Identifizieren, ob der Frame ein I-Frame, ein P-Frame oder ein B-Frame ist, **dadurch gekennzeichnet, dass** für den Fall, dass der Frame als ein I-Frame identifiziert ist, das Verfahren das Ausführen keiner Transrating-Operation an dem Frame umfasst, und wobei
für den Fall, dass er als ein P-Frame oder ein B-Frame identifiziert ist:

das Verfahren das Bestimmen (6) der Anzahl (N) von Transformationskoeffizienten ungleich Null ($C_1$ bis $C_N$) in jedem Block für eine Mehrzahl von Datenblöcken umfasst; für jeden Block, Ignorieren eines Verhältnisses der Anzahl (N) an Transformationskoeffizienten ungleich Null, wobei das ignorierte Verhältnis von Transformationskoeffizienten ungleich Null bestimmt wird durch einen Faktor von $\alpha$, wobei es in einem Block eines empfangenen Frames N Transformationskoeffizienten ungleich Null gibt und M in einem Block des Videostroms mit Transrating, wobei $M = \alpha\,N$ ist; und
Erzeugen eines Ausgangsbitstroms (Y), der alle Koeffizienten aus Blöcken in I-Frames umfasst und nur die beibehaltenen Koeffizienten von Blöcken aus den P- und B-Frames;

wobei eine nichtlineare Beziehung zwischen M und N besteht, und wobei $\alpha$ in Echtzeit pro Block variiert, um die Bitrate des Ausgangsbitstroms durch eine Methode, wie etwa eine Least-Mean-Square-Beziehung, dynamisch zu steuern; und wobei $\alpha$ als eine Funktion der Ausgangsbitrate und der gewünschten Bitrate definiert ist.

**2.** Verfahren nach Anspruch 1, wobei die bestimmten Transformationskoeffizienten durch Einfügen eines Blockende-Codes (24) an einer definierten Stelle in jedem Block des Frames in dem Ausgangsbitstrom (Y) entfernt werden.

**3.** Verfahren nach Anspruch 2, wobei die Position, an welcher ein Blockende-Code (24) in dem Ausgangsbitstrom (Y) bereitgestellt wird, variiert, um die Bitrate des Videosignals mit Transrating zu steuern.

**4.** Verfahren nach einem der Ansprüche 1 bis 3, umfassend das Bereitstellen eines Schalters (10), der in einer Konfiguration angeordnet ist, um den empfangenen Bitstrom (X) direkt in den Ausgangsbitstrom (Y) umzuschalten, und einer zweiten Konfiguration, um einen transkodierten Bitstrom des Eingangsbitstroms in den Ausgangsstrom umzuschalten.

**5.** Verfahren nach Anspruch 4, wobei der Schalter (10) abhängig von einem oder mehreren der folgenden gesteuert wird: N, der gewünschten Ausgangsbitrate, dem Frame-Typ, der Blockposition in dem Bild, der Bildposition in einer Gruppe von Bildern (GOP), der Ausgangsbitrate und anderen Stromparametern.

**6.** Verfahren nach einem der Ansprüche 1 bis 5, wobei $\alpha$ durch die folgenden Gleichungen definiert ist:

$$\alpha_P(t + 1) = \alpha_P(t) + \mu(p - p(\alpha_P(t))$$

$$\alpha_B(t + 1) = \alpha_B(t) + \mu(b - b(\alpha_B(t)),$$

wobei folgendes gilt:

$t$ bezeichnet die Aktualisierungszeit,
$b$ und $p$ bezeichnen entsprechend den Zielbitverbrauch auf der Block-, Makroblock-, Schicht- oder Frame-Ebene für B- bzw. P-Frames;
$b(\alpha)$ und $p(\alpha)$ bezeichnen den resultierenden Transrator-Bitverbrauch als eine Funktion von a;
$\mu$ ($\mu > 0$) steht für die Schrittgröße, die ausreichend klein gewählt ist für einen stabilen adaptiven Algorithmus und groß genug, um eine Annäherung an die Zielbitrate sicherzustellen.

**7.** Verfahren nach einem der Ansprüche 1 bis 6, wobei der Eingangsbitstrom (X) ein codiertes MPEG-2-Videosignal ist.

**8.** Verfahren nach einem der Ansprüche 1 bis 7, wobei der Eingangsbitstrom (X) in Form einer diskreten Kosinustransformation einer ursprünglichen Bilddatei gegeben ist.

**9.** Vorrichtung (2) zum Transkodieren eines Videosignals, das aus einem Eingangsbitstrom (X) besteht, der Frames eines Videos darstellt und der Transformationskoeffizienten ungleich Null ($C_1$ bis $C_N$) des Videosignals darstellt, wobei jeder Frame aus Blöcken von Pixeln besteht, wobei es in dem Eingangsbitstrom einen Datenblock (18) gibt, der jedem Block von Pixeln entspricht, wobei die Vorrichtung folgendes umfasst:

einen Empfänger zum Empfangen des codierten Videosignals in Form eines digitalen Bitstroms;

eine Leseeinrichtung, die so angeordnet ist, dass sie nach dem Empfang eines Frames identifiziert, ob der Frame ein I-Frame, ein P-Frame oder ein B-Frame ist; und

**dadurch gekennzeichnet, dass** die Vorrichtung eine Strom-Copy-Control (12) umfasst, die so angeordnet ist, dass sie für den Fall, dass der Frame als ein I-Frame identifiziert ist, an dem Frame keine Transrating-Operation ausführt, und dass sie, für den Fall, dass der Frame als ein P-Frame oder ein B-Frame identifiziert ist, die Anzahl (N) von Koeffizienten ungleich Null in jedem Block für eine Mehrzahl von Datenblöcken bestimmt, und für jeden Block, ein Verhältnis der Anzahl (N) an Transformationskoeffizienten ungleich Null ignoriert, wobei das ignorierte Verhältnis von Transformationskoeffizienten ungleich Null bestimmt wird durch einen Faktor von a, wobei es in einem Block (18) eines empfangenen Frames N Transformationskoeffizienten ungleich Null gibt und M in einem Block (20) des Videostroms mit Transrating, wobei M = $\alpha$ N ist; wobei die Strom-Copy-Control (12) für folgenden Zweck angeordnet ist: Erzeugen eines Ausgangsbitstroms, der alle Koeffizienten aus Blöcken in I-Frames umfasst und nur die beibehaltenen Koeffizienten von Blöcken aus den P- und B-Frames; wobei eine nichtlineare Beziehung zwischen M und N besteht, und wobei $\alpha$ in Echtzeit pro Block variiert, um die Bitrate des Ausgangsbitstroms durch eine Methode, wie etwa eine Least-Mean-Square-Beziehung, dynamisch zu steuern; und wobei $\alpha$ als eine Funktion der Ausgangsbitrate und der gewünschten Bitrate definiert ist.

10. Vorrichtung (2) nach Anspruch 9, ferner umfassend eine Blockende-Positionsdetektor (8) zum Erkennen der Position des Endes von Blöcken in dem Eingangsbitstrom (X).

11. Vorrichtung (2) nach einem der Ansprüche 9 und 10, die einen Schalter (10) umfasst, der in einer Konfiguration angeordnet ist, um den empfangenen Bitstrom (X) direkt in den Ausgangsbitstrom (Y) zu kopieren, und in einer zweiten Konfiguration, um verarbeitete Frames in den zu Ausgangsstrom kopieren.

12. Vorrichtung (2) nach Anspruch 11, die einen Blockkoeffizientenzähler umfasst, um die Koeffizienten ($C_1$ bis $C_N$) in einem empfangenen Block (18) zu zählen, und um die Anzahl N von Koeffizienten ungleich Null an die Strom-Copy-Control (12) bereitzustellen, die so angeordnet ist, dass sie den Schalter (10) steuert, wobei die Anzahl N abhängig ist von der Bewegungsaktivität in dem Block.

13. Vorrichtung (2) nach Anspruch 12, wobei die Strom-Copy-Control (12) so angeordnet ist, dass sie die Anzahl M von in einem Block (20) in dem Ausgangsstrom zu inkludierenden Koeffizienten bestimmt.

14. Vorrichtung (2) nach Anspruch 13, wobei die Strom-Copy-Control (12) so gestaltet ist, dass sie die Anzahl M abhängig von verschiedenen Parametern bestimmt, die einen oder mehrere der folgenden umfassen: der gewünschten Ausgangsbitrate, der tatsächlichen Ausgangsbitrate, des Frame-Typs und der Anzahl N der Koeffizienten ungleich Null in einem empfangenen Block (18).

15. Vorrichtung nach Anspruch 14, wobei die Strom-Copy-Control (12) so angeordnet ist, dass sie einen Blockende-Code (24) in den Ausgangsbitstrom (Y) an einer Position in einem Block von Koeffizienten in dem Ausgangsbitstrom so einfügt, dass der Block nur M Koeffizienten ($C_1$ bis $C_M$) aufweist.

16. Vorrichtung (2) nach einem der Ansprüche 9 bis 15, wobei $\alpha$ durch die folgenden Gleichungen definiert ist:

$$\alpha_P(t + 1) = \alpha_P(t) + \mu(p - p(\alpha_P(t))$$

$$\alpha_B(t + 1) = \alpha_B(t) + \mu(b - b(\alpha_B(t)),$$

wobei folgendes gilt:

$t$ bezeichnet die Aktualisierungszeit, $b$ und $p$ bezeichnen entsprechend den Zielbitverbrauch auf der Block-, Makroblock-, Schicht- oder Frame-Ebene für B- bzw. P-Frames; $b(\alpha)$ und $p(\alpha)$ bezeichnen den resultierenden Transrator-Bitverbrauch als eine Funktion von $\alpha$; $\mu$ ($\mu > 0$) steht für die Schrittgröße, die ausreichend klein gewählt ist für einen stabilen adaptiven Algorithmus und groß genug, um eine Annäherung an die Zielbitrate sicherzustellen.

**17.** Video-Wiedergabevorrichtung, die eine Vorrichtung (2) zum Transkodieren eines kodierten Videosignals nach einem der Ansprüche 9 bis 16 umfasst.

## Revendications

**1.** Procédé de transcodage d'un signal vidéo constitué d'un flux binaire d'entrée (X) représentatif de trames d'une vidéo et représentatif des coefficients de transformation non nuls du signal vidéo, chaque trame étant constituée de blocs de pixels, un bloc de données (18) étant présent dans le flux binaire d'entrée correspondant à chaque bloc de pixels, le procédé comprenant les étapes consistant à :

pour le flux binaire d'une trame du signal vidéo, identifier si la trame est une trame I, une trame P ou une trame B, **caractérisé en ce que** si la trame est identifiée comme une trame I, le procédé comprend l'étape consistant à n'exécuter aucune opération de modification de débit sur la trame et
si elle est identifiée comme une trame P ou une trame B :

le procédé comprend l'étape consistant à déterminer (6) le nombre (N) de coefficients de transformation non nuls ($C_1$ à $C_N$) dans chaque bloc pour une pluralité de blocs de données ;
pour chaque bloc, ignorer une proportion du nombre (N) de coefficients de transformation non nuls, la proportion de coefficients de transformation non nuls ignorés étant déterminée par un facteur de $\alpha$, N coefficients de transformation non nuls étant dans un bloc d'une trame reçue et M dans un bloc du flux vidéo à débit modifié, où M $= \alpha$ N ; et
générer un flux binaire de sortie (Y) comprenant tous les coefficients des blocs dans les trames I et seulement les coefficients retenus de blocs des trames P et B, une relation non linéaire entre M et N existant et $\alpha$ étant modifié en temps réel sur une base par bloc pour commander dynamiquement le débit binaire du flux binaire de sortie par un procédé tel qu'une relation des moindres carrés moyens ; et

$\alpha$ étant défini en fonction du débit binaire de sortie et du débit binaire souhaité.

**2.** Procédé selon la revendication 1, les certains coefficients de transformation étant retirés de la trame par l'insertion d'un code de fin de bloc (24) à un point défini dans chaque bloc de la trame dans le flux binaire de sortie (Y).

**3.** Procédé selon la revendication 2, la position à laquelle un code de fin de bloc (24) est fourni dans le flux binaire de sortie (Y) étant modifiée pour commander le débit binaire du signal vidéo à débit modifié.

**4.** Procédé selon l'une quelconque des revendications 1 à 3, comprenant l'étape consistant à fournir un commutateur (10) conçu dans une configuration pour commuter le flux binaire reçu (X) directement sur le flux binaire de sortie (Y) et dans une seconde configuration pour commuter un flux binaire transcodé du flux binaire d'entrée sur le flux de sortie.

**5.** Procédé selon la revendication 4, le commutateur (10) étant commandé en fonction de N, du débit binaire de sortie souhaité, du type de trame, de la position du bloc dans l'image, de la position de l'image dans un groupe d'images (GOP), du débit binaire de sortie et/ou d'autres paramètres du flux.

**6.** Procédé selon l'une quelconque des revendications 1 à 5, $\alpha$ étant défini par les équations suivantes

$$\alpha_P(t + 1) = \alpha_P(t) + \mu(p - p(\alpha_P(t))$$

$$\alpha_B(t + 1) = \alpha_B(t) + \mu(b - b(\alpha_B(t)),$$

dans lesquelles

$t$ représente l'heure de mise à jour,
$b$ et $p$ sont la consommation de bits cible au niveau du bloc, du macrobloc, de la tranche ou de la trame pour les trames B et P respectivement,
$b(\alpha)$ et $p(\alpha)$ sont la consommation de bits de dispositif de modification de débit qui en résulte en fonction de a,
$\mu$ ($\mu>0$) est la taille du pas qui est choisie suffisamment petite pour avoir un algorithme d'adaptation stable et suffisamment grande pour assurer la convergence vers le débit binaire cible.

**7.** Procédé selon l'une quelconque des revendications 1 à 6, le flux binaire d'entrée (X) étant un signal vidéo MPEG-2 codé.

**8.** Procédé selon l'une quelconque des revendications 1 à 7, le flux binaire d'entrée (X) étant sous la forme d'une transformée en cosinus discrète d'un fichier image original.

**9.** Appareil (2) pour transcoder un signal vidéo codé constitué d'un flux binaire (X) correspondant à des trames d'une vidéo et représentatif des coefficients de transformation non nuls ($C_1$ à $C_N$) du signal vidéo, chaque trame étant constituée de blocs de pixels, chaque bloc de pixels ayant un bloc de données (18) correspondant dans le flux binaire, l'appareil comprenant :

un récepteur permettant de recevoir le signal vidéo codé sous la forme d'un flux binaire numérique ;
un lecteur conçu pour, à la réception d'une trame, identifier si la trame est une trame I, une trame P ou une trame B ; et
**caractérisé en ce que** l'appareil comprend une commande de copie de flux (12) conçue, si la trame est identifiée comme une trame I, pour n'effectuer aucune modification de débit sur la trame et si la trame est identifiée comme une trame P ou une trame B, pour déterminer le nombre (N) de coefficients non nuls à l'intérieur de chaque bloc pour une pluralité de blocs de données et, pour chaque bloc, de ne pas tenir compte d'une proportion du nombre (N) de coefficients de transformation non nuls, la proportion de coefficients de transformation non nuls ignorés étant déterminée par un facteur de $\alpha$, N coefficients de transformation non nuls étant dans un bloc (18) d'une trame reçue et M dans un bloc (20) du flux vidéo à débit modifié, où M = $\alpha$ N ; la commande de copie de flux (12) étant conçue pour générer un flux binaire de sortie comprenant tous les coefficients des blocs dans les trames I et seulement les coefficients retenus des blocs des trames P et B ; une relation non linéaire existant entre M et N et $\alpha$ étant modifié en temps réel sur une base par bloc pour commander dynamiquement le débit binaire du flux binaire de sortie par un procédé tel qu'une relation des moindres carrés moyens ; et $\alpha$ étant défini comme une fonction du débit binaire de sortie et du débit binaire souhaité.

**10.** Appareil (2) selon la revendication 9, comprenant un détecteur de position de fin de bloc (8) pour détecter la position dans le flux binaire d'entrée (X) de la fin de blocs.

**11.** Appareil (2) selon l'une quelconque des 9 et 10, comprenant un commutateur (10) disposé dans une configuration pour copier le flux binaire d'entrée (X) directement dans le flux binaire de sortie (Y) et dans une seconde configuration pour copier les trames traitées dans le flux de sortie.

**12.** Appareil (2) selon la revendication 11, comprenant un compteur de coefficients de bloc pour compter les coefficients ($C_1$ à $C_N$) dans un bloc reçu (18) et pour fournir le nombre N de coefficients non nuls à ladite commande de copie de flux (12) conçue pour commander le commutateur (10), le nombre N dépendant de l'activité de mouvement dans le bloc.

**13.** Appareil (2) selon la revendication 12, la commande de copie de flux (12) étant conçue pour déterminer le nombre M de coefficients à inclure dans un bloc (20) dans le flux de sortie.

**14.** Appareil (2) selon la revendication 13, la commande de copie de flux (12) étant conçue pour déterminer le nombre M en fonction de divers paramètres, y compris le débit binaire de sortie souhaité, le débit binaire de sortie réel, le type de trame et/ou le nombre N de coefficients non nuls dans un bloc reçu (18).

**15.** Appareil selon la revendication 14, la commande de copie de flux (12) étant conçue pour insérer un code de fin de bloc (24) dans le flux binaire de sortie (Y) à une position dans un bloc de coefficients dans le flux de sortie de sorte que le bloc ne contienne que M coefficients ($C_1$ à $C_M$).

**16.** Appareil (2) selon l'une quelconque des revendications 9 à 15, $\alpha$ étant défini par les équations suivantes

$$\alpha_P(t + 1) = \alpha_P(t) + \mu(p - p(\alpha_P(t))$$

$$\alpha_B(t + 1) = \alpha_B(t) + \mu(b - b(\alpha_B(t)),$$

dans lesquelles

$t$ représente l'heure de mise à jour,
$b$ et $p$ sont la consommation de bits cible au niveau du bloc, du macrobloc, de la tranche ou de la trame pour les trames B et P respectivement,
$b(\alpha)$ et $p(\alpha)$ sont la consommation de bits de dispositif de modification de débit qui en résulte en fonction de $\alpha$,
$\mu$ ($\mu>0$) est la taille du pas qui est choisie suffisamment petite pour avoir un algorithme d'adaptation stable et suffisamment grande pour assurer la convergence vers le débit binaire cible.

**17.** Appareil de lecture vidéo comprenant un dispositif (2) pour le transcodage d'un signal vidéo codé selon l'une quelconque des revendications 9 à 16.

| ENCODED VIDEO | → | **DECODER** | → | FRAME BUFFER | → | **ENCODER** | → | ENCODED VIDEO |

NEW PARAMETERS:QUANTIZATION, FRAME RATE,FRAME SIZE...

## Fig. 1 Prior art

| ENCODED VIDEO | → | PICTURE READER DECODER | → | PICTURE DECISION BLOCK | I,P → | REMERGE BLOCK | → | ENCODED VIDEO |

T1 TRANSCODER (B FRAMES)

B

## Fig. 2 Prior art

T1 TRANSCODER

| ENCODED B FRAME | → | VLD | → | $Q^{-1}$ | | Q | → | VLC | → | ENCODED B FRAME |

## Fig. 3 Prior art

Network
101

Network
127

Rate Control
Stage 115

VLC Decoding
103

Filter Stage
111

Requantization
113

VLC Encoding
125

**Fig. 4 Prior art**

Start

Initialize Rate Control
Information

Receive A Macroblock

Is
Rate Control
Information
Available
?

No

Yes

Determine The Cutoff
Index Using Rate
Control Information

Select Initial Value For
The Cutoff Index

Alter Block Coefficients
Associated With the
Macroblock Using
Cutoff Index

Update Rate Control
Information

**Fig. 5 Prior art**

EP 1 978 743 B1

Fig. 6 Prior art

Fig. 7 Prior art

15

**Fig.8**

**Fig. 9  Block Adaptive Truncation**

fig. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6763070 A
- EP 1553779 A
- US 6937770 A